# EUROPÄISCHE PATENTSCHRIFT

(11) **EP 1 193 416 B1**
(45) Veröffentlichungstag und Bekanntmachung des Hinweises auf die Patenterteilung: **18.12.2002**
(21) Anmeldenummer: 01121034.1
(22) Anmeldetag: 01.09.2001
(51) Int. Cl.: F16D 65/12

(54) **Herstellverfahren für eine innenbelüftete Bremsscheibe**
Method of manufacturing an internally ventilated brake disc
Procédé de fabrication d'un disque de frein ventilé

(30) Priorität: 27.09.2000 DE 10047752
(43) Veröffentlichungstag der Anmeldung: 03.04.2002
(73) Patentinhaber: Bayerische Motoren Werke Aktiengesellschaft, 80809 München (DE)
(72) Erfinder: Stimpel, Herbert, 82008 Unterhaching (DE); Spoerer, Josef, Dr., 84072 Reichertshausen (DE)

(56) Entgegenhaltungen:
- DE-A- 4 445 226
- DE-A- 19 816 381
- DE-U- 1 974 457
- US-A- 3 730 304
- US-A- 5 620 042

## Beschreibung

Die Erfindung betrifft ein Herstellverfahren für eine innenbelüftete Bremsscheibe, die zumindest teilweise aus einem Werkstoff der Gruppe der Kohlenstoffe besteht, wobei zwei einzeln hergestellte Reibringe, die jeweils an ihren einander zugewandten Flächen mit Rippen zur Bildung von Luftkanälen versehen sind, durch Kleben miteinander verbunden werden. Zum technischen Umfeld wird neben der DE 198 16 381 A1 insbesondere auf die DE 44 45 226 A1 verwiesen.

Bremsscheiben mit Innenbelüftung aus üblichen Werkstoffen, so insbesondere Grauguß, werden üblicherweise direkt im Gussverfahren hergestellt, wobei die für die Belüftung erforderlichen Hohlräume innerhalb des Reibringes, nämlich die sog. Belüftungskanäle üblicherweise mittels in die entsprechende Gussform eingelegter Kerne erzeugt werden.

Die neuere Entwicklung geht zu anderen Materialien für Fahrzeug-Bremsscheiben, nämlich zu Werkstoffen aus der Gruppe der Kohlenstoffe, wobei die Bremsscheiben aus Carbonfasern, zumeist in Kunststoff integriert, oder auch aus carbonfaserverstärkter Keramik bestehen können. Die Belüftungskanäle derartiger Bremsscheiben können durch Ausbohren oder Ausfräsen aus einem als massiven Vorkörper hergestellten Carbonfaser-Kunststoff-Reibring (CFK) hergestellt werden, welcher ggf. anschließend durch Silizieren zu CsiC, d.h. zu carbonfaserverstärkter Keramik verdedelt wird.

Ein anderes Herstellverfahren, das insbesondere auch für eine Bremsscheibe aus einem Faserverbundwerkstoff geeignet ist, ist in der eingangs erstgenannten DE 198 16 381 A1 beschrieben. Hier sind zunächst zwei Scheibenelemente vorgesehen, an denen jeweils Rippen vorgesehen sind, die nach geeignetem Zusammenfügen der beiden Scheibenelemente die Belüftungskanäle bilden. Hierzu sind die Rippen der beiden Scheibenelemente jeweils derart miteinander verbindbar, dass diese an gegenüberstehenden Stirnflächen miteinander korrespondierende sog. Einhakverbindungen aufweisen. Über diese bevorzugt stufenförmig ausgebildeten Einhakverbindungen kann zwar durch Kleben oder dgl. ein sicherer, quasi formschlüssiger Verbund hergestellt werden, jedoch erfordert die Herstellung der entsprechenden Fügestellen hochgenau bearbeitete Fügeflächen, wobei nicht nur die Rippen (d.h. die Kühlkanalstege), sondern auch die Fügeflächen bzgl. ihrer Form- und Lagetoleranzen, insbesondere bzgl. der Teilungstoleranzen hohe Anforderungen erfüllen müssen, damit die beiden Scheibenelemente passgenau gefügt werden können. Um den gewünschten Formschluß sowie eine ausreichende Positioniersicherheit zu erhalten, sind aufwendige Bearbeitungsverfahren, wie z.B. CNC-Fräsen erforderlich; ferner erfordert auch der Fügevorgang selbst ein genaues Positionieren und entsprechende Sorgfalt, um die Fügeflächen beim Zusammensetzen nicht zu beschädigen sowie um die gewünschte Form ohne Teilungsversatz zu erhalten.

Wesentlich einfacher herstellbar sind demgegenüber die in der eingangs zweitgenannten DE 44 45 226 A1 beschriebenen Bremsscheiben, insbesondere, wenn die Rippen (oder Kühlkanalstege) nur an einer der beiden Scheibenhälften bzw. an einem der beiden Reibringe vorgesehen sind, die anschließend einfach aneinander gefügt werden können. Jedoch geht diese Einfachheit zu Lasten der Festigkeit der Bremsscheibe, d.h. die dann zwangsläufig in einer zu den Reibringen parallelen Ebene verlaufende einzige Trennebene ist unter Stabilitätsgesichtspunkten ungünstig.

Eine Abhilfemaßnahme für diese geschilderte Problematik aufzuzeigen, ist Aufgabe der vorliegenden Erfindung, d.h. das Herstellverfahren nach dem Oberbegriff des Anspruchs 1 soll dahingehend verbessert werden, dass bei relativ einfachen Bearbeitungsschritten ein hochwertiges Ergebnis erzielt werden kann.
Die Lösung dieser Aufgabe ist dadurch gekennzeichnet, dass die Rippen des einen Reibringes jeweils mit ihren freien Stirnflächen in am anderen Reibring abseits von dessen Rippen vorgesehene Nuten eingesetzt werden. Vorteilhafte Weiterbildungen sind Inhalt der Unteransprüche.

Erfindungsgemäß sind nun an beiden Reibringen die Kühlkanäle bildende Rippen vorgesehen, wobei jedoch beim Zusammensetzen der beiden Reibringe zur fertigen Bremsscheibe keine Rippen des einen Reibringes auf Rippen des anderen Reibringes treffen. Vielmehr ragen die Rippen des einen (ersten) Reibringes mit ihren Stirnseiten in Nuten oder muldenförmige Vertiefungen ein, die in der Seitenfläche des anderen, zweiten Reibringes, die dem ersten Reibring zugewandt ist, vorgesehen sind. Die sog. Nuten oder muldenförmigen Vertiefungen zur Aufnahme der Rippenstirnseiten des jeweils anderen Reibringes befinden sich an einem Reibring dann jeweils abseits von dessen Rippen und bevorzugt zwischen zwei seiner Rippen.

Bei einer derartigen Gestaltung ergibt sich weiterhin eine relativ einfache Fertigung, da jede Rippe eine ebene, dem zugeordneten Reibring parallele Stirnfläche aufweisen kann, wobei dann jedoch nicht mehr eine einzige Trennebene zwischen den beiden Reibringen vorhanden ist, sondern sich derer zwei ergeben, nämlich im Stirnseitenabschnitt der Rippen des ersten Reibringes und im Stirnseitenabschnitt der Rippen des zweiten Reibringes. Hieraus resultiert eine deutliche Festigkeitssteigerung der in den beiden sog. Stirnseitenabschnitten zusammengeklebten (oder dgl.) Bremsscheibe.

Der Fertigungsaufwand kann dabei so gering als möglich gehalten werden, wenn es sich bei den beiden Reibringen mit ihren darauf befindlichen Rippen und Nuten (zur Aufnahme der Stirnseitenabschnitte der Rippen des jeweils anderen Reibringes) um Gleichteile handelt. Wenn sich nämlich bei den beiden zur Bremsscheibe erfindungsgemäß zusammenzusetzenden Reibringen die Rippen bzw. Kühlkanalstege und muldenförmige Vertiefungen abwechseln, können eventuell identische Reibringe mit Rippen verwendet werden, die beim Zusammenfügen jeweils um den Abstand eines Kühlkanals gegeneinander verdreht gefügt werden. Hierdurch werden vorteilhafterweise im Herstellungsprozess nur gleiche Teile verwendet, wodurch sich der Aufwand an Verwaltung, Werkzeugen, Spannmitteln, Bearbeitungsvarianten, Qualitätssicherung und Ausschuß verringert.

Wie bereits dargelegt wurde, wird die Herstellung von insbesondere CSiC-Bremsscheiben vorgeschlagen, die aus jeweils zwei Reibringen oder Halbschalen aus CFK gebildet werden und mit Rippen zur Bildung von Kühlluftkanälen versehen sind, wobei diese Reibringe oder sog. Halbschalen zunächst zusammengeklebt und danach ggf. zusammensiliziert werden. Dabei kann die Herstellung jeder dieser Halbschalen (oder Reibringe) mit beliebiger Kühlkanal-Geometrie durch spanende oder spanlose Formgebung erfolgen, wobei die Kühlkanalstege oder Rippen ihre volle axiale Länge erhalten, so dass sie sich im zusammengebauten Zustand vom ersten Reibring zum zweiten Reibring hin erstrecken. Korrespondierend zu den Rippen oder Kühlkanalstegen des anderen Reibringes sind dabei in jeden Reibring 1 - 3 mm tiefe muldenförmigen Vertiefungen oder Nuten eingearbeitet, wobei dieses Einarbeiten durch spanende oder spanlose Formgebung jeweils so erfolgen soll, dass der korrespondierende Kühlkanalsteg beim Fügen ohne Toleranzprobleme hineinpasst.

Dabei können vor dem Miteinanderverkleben der beiden Reibringe einer Bremsscheibe die Fügeflächen an den Kühlkanalstegen/Rippen durch ein einfaches Verfahren überarbeitet werden, welches geeignet ist, die Fügeflächen in einer Ebene einzustellen (wie bspw. Drehen, Flächenschleifen), sofern die Genauigkeit einer eventuell angewandten spanlosen Formgebung nicht ausreicht. Anschließend werden bevorzugt die Nuten, d.h. die muldenförmigen Vertiefungen, mit einem speziellen silizierfähigen Kleber beschichtet, wonach das Zusammenfügen der beiden Reibringe/Halbschalen mit relativ geringem Positionieraufwand erfolgen kann, da die Formgestaltung wenig toleranzempfindlich ist und die Teile aufgrund der Formgebung quasi ineinander einrasten.

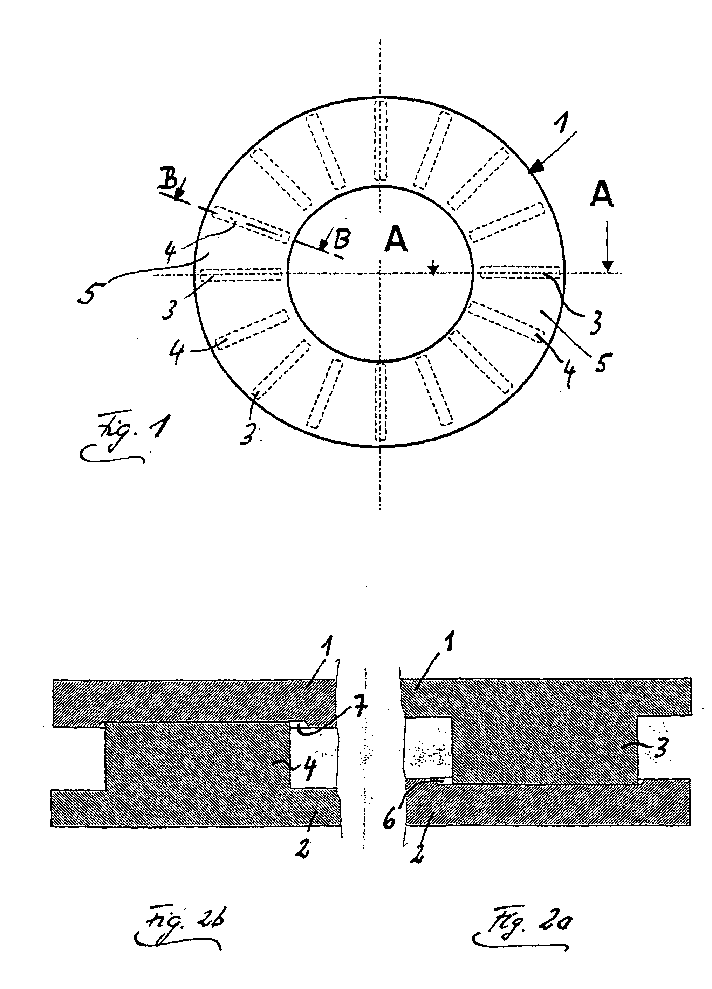

Die beigefügten Prinzipskizzen zeigen ein bevorzugtes Ausführungsbeispiel einer erfindungsgemäß hergestellten innenbelüfteten Fahrzeug-Bremsscheibe, wobei **Figur 1** eine Seitenansicht zeigt, während in **Figur 2a** der Schnitt A-A aus Figur 1 und in **Figur 2b** der Schnitt B-B aus Figur 1 dargestellt ist.

Mit der Bezugsziffer 1 ist der erste Reibring und mit der Bezugsziffer 2 der zweite Reibring einer vom grundsätzlichen Aufbau her üblichen innenbelüfteten Kfz.-Bremsscheibe bezeichnet, d.h. zwischen den beiden voneinander beabstandeten Reibringen 1, 2 sind eine Vielzahl von Rippen 3, 4 vorgesehen, die sich im wesentlichen in Radialrichtung der kreiszylindrischen Bremsscheibe erstrecken, und zwischen denen somit Kühlkanäle 5 gebildet werden, durch die ein Kühlluftstrom geleitet werden kann.

In Umfangsrichtung der Bremsscheibe betrachtet sind dabei abwechselnd Rippen 3 und 4 angeordnet, wobei die Rippen 3 Bestandteil des Reibringes 1 und die Rippen 4 Bestandteil des Reibringes 2 sind, d.h. jeweils separat wird zunächst der Reibring 1 mit den zugeordneten Rippen 3 bzw. der Reibring 2 mit seinen zugeordneten Rippen 4 gefertigt. Dabei sind die Reibringe 1, 2 (mit den zugeordneten Rippen 3, 4) zumindest teilweise aus einem Werkstoff der Gruppe der Kohlenstoffe gefertigt, d.h. es handelt sich um eine C/C-Bremsscheibe oder um eine CFK-Bremsscheibe oder um eine CSiC-Bremsscheibe, falls eine Silizierung durchgeführt wird.

Wie ersichtlich, sind die beiden Reibringe 1, 2 dabei derart zur Bremsscheibe zusammengesetzt, dass die Rippen 3 des ersten Reibringes 1 jeweils mit ihren freien Stirnflächen in am zweiten Reibring 2 abseits von dessen Rippen 4, genauer zwischen zwei seiner Rippen 4 vorgesehene Nuten 6 eingesetzt sind (vgl. Fig.2a). Ebenso sind die Rippen 4 des zweiten Reibringes 2 jeweils mit ihren freien Stirnflächen in am ersten Reibring 1 abseits von dessen Rippen 3, genauer zwischen zwei seiner Rippen 3 vorgesehene Nuten 7 eingesetzt (vgl. Fig.2b). Wie bereits erläutert wurde, sind über die besagten Rippen-Stirnflächen die beiden Reibringe 1, 2 unlösbar miteinander verbunden, und zwar miteinander verklebt, wozu die Nuten 6, 7 (auch muldenförmige Vertiefungen genannt) mit einem geeigneten Klebstoff ausgefüllt werden. Dabei können - wie dargestellt - die Nuten 6, 7 an jeder Seite um ca. 0,5 bis 1 mm größer sein als die Rippen-Stirnseiten, um letztere einfach einsetzen zu können, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen. Stets ist eine kostengünstige Herstellung bspw. von CSiC-Bremsscheiben in größeren Stückzahlen möglich, da viele Arbeitsschritte in spanloser Formgebung erfolgen können. Das Verfahren zeichnet sich durch hohe Funktionssicherheit sowohl im Herstellungsprozess als auch in der Endverwendung aus, da Kraftschluss und Formschluss kombiniert sind sowie große Klebeflächen zur Verfügung stehen. Ferner liegt nur geringer Verlust von Rohmaterial vor, da minmaler Zerspanungsumfang anfällt. Vorteilhafterweise ist auch der Positionierungsaufwand beim Fügen gering.

## Patentansprüche

1. Herstellverfahren für eine innenbelüftete Bremsscheibe, die zumindest teilweise aus einem Werkstoff der Gruppe der Kohlenstoffe besteht, wobei zwei einzeln hergestellte Reibringe (1, 2), die jeweils an ihren einander zugewandten Flächen mit Rippen (3, 4) zur Bildung von Luftkanälen (5) versehen sind, durch Kleben miteinander verbunden werden,
**dadurch gekennzeichnet, dass** die Rippen (3 bzw. 4) des einen Reibringes (1 bzw. 2) jeweils mit ihren freien Stirnflächen in am anderen Reibring (2 bzw. 1) abseits von dessen Rippen (4 bzw. 3) vorgesehene Nuten (6 bzw. 7) eingesetzt werden.

2. Herstellverfahren nach Anspruch 1,
**dadurch gekennzeichnet, dass** die beiden Reibringe (1, 2) mit ihren Rippen (3, 4) Gleichteile sind.

3. Herstellverfahren nach Anspruch 1 oder 2,
**gekennzeichnet durch** zumindest eines der folgenden Merkmale:
• die Reibringe (1, 2) mit den Rippen (3, 4) sowie die Nuten (6, 7) werden spanlos oder spanend geformt
• die als Fügeflächen fungierenden freien Stirnseiten der Rippen (3, 4) werden spanend unter ausreichender Oberflächenqualität auf gleiche Ebene gebracht
• die Nuten (6, 7) werden vor dem Zusammenbringen der Reibringe (1, 2) mit einem silizierfähigen Kleber beschichtet.

## Claims

1. A method of producing an internally ventilated brake disc consisting at least partly of a carbonaceous material, wherein two individually produced friction rings (1, 2), each with ribs (3, 4) on their facing surfaces for forming air ducts (5), are joined by sticking,
**characterised in that** the free end surfaces of the ribs (3, 4) on one friction ring (1, 2) are inserted in grooves (6, 7) in the other friction ring (2, 1) at the side of the ribs (4, 3) thereon.

2. A method according to claim 1, **characterised in that** the two friction rings (1, 2) and ribs (3, 4) are identical.

3. A method according to claim 1 or 2, **characterised by** at least one of the following features:
• the friction rings (1, 2), ribs (3, 4) and grooves (6, 7) are shaped with or without cutting,
• the free end faces of the ribs (3, 4) serving as joint surfaces are cut until they have a surface of adequate quality in the same plane, and
• the grooves (6, 7) are coated with a siliconisable adhesive before the friction rings (1, 2) are joined.

## Revendications

1. Procédé de fabrication d'un disque de frein ventilé qui est, au moins en partie, dans un matériau du groupe du carbone, selon lequel on relie par collage deux anneaux de friction (1, 2) fabriqués séparément, les surfaces tournées l'une vers l'autre comportent des nervures (3, 4) pour former des canaux de passage d'air (5),
**caractérisé en ce que**
les nervures (3, 4) d'un anneau de friction (1, 2) sont chaque fois placées avec leur surface frontale libre dans des rainures (6, 7) prévues dans l'autre anneau de friction (2, 1) à côté des nervures (4, 3) de cet anneau de friction.

2. Procédé de fabrication d'un disque de frein ventilé selon la revendication 1,
**caractérisé en ce que**
les deux anneaux de friction (1, 2) avec leurs nervures (3, 4) sont des pièces identiques.

3. Procédé de fabrication d'un disque de frein ventilé selon la revendication 1 ou la revendication 2,
**caractérisé par**
au moins l'une des caractéristiques suivantes :
- les anneaux de friction (1, 2) avec les nervures (3, 4) et les rainures (6, 7) sont mis en forme par un procédé d'enlèvement de copeaux ou sans enlèvement de copeaux,
- les faces frontales libres des nervures (3, 4) fonctionnant comme surfaces d'assemblage sont mises dans un même plan par usinage pour avoir une qualité de surface suffisante, et
- avant l'assemblage des anneaux de friction les rainures (6, 7) reçoivent un revêtement d'une colle susceptible de donner de la silice.
